Europäisches Patentamt

European Patent Office

Office européen des brevets

(11) Publication number: **0 265 846 B1**

# EUROPEAN PATENT SPECIFICATION

(45) Date of publication of patent specification: **21.09.94**  (51) Int. Cl.5: **C08F 8/34**

(21) Application number: **87115509.9**

(22) Date of filing: **22.10.87**

The file contains technical information submitted after the application was filed and not included in this specification

(54) **Method for preparing n-sulfomethyl acrylamide, acrylic acid terpolymers from polyacrylonitrile.**

(30) Priority: **23.10.86 US 922219**

(43) Date of publication of application:
**04.05.88 Bulletin 88/18**

(45) Publication of the grant of the patent:
**21.09.94 Bulletin 94/38**

(84) Designated Contracting States:
**DE ES GR IT**

(56) References cited:
**US-A- 3 979 348
US-A- 3 997 606**

**CHEMICAL ABSTRACTS, vol. 93, no. 6, 11th August 1980, page 43, abstract no.47786w, Columbus, Ohio, US; & SU-A-724 523**

**Methoden der organischen Chemie (Houben-Weyl), 4th edition, Georg Thieme-Verlag, 1963, Vol. XIV/2, pages 708 - 713**

**Encyclopedia of Polymer Science and Technology, J. Wiley & Sons, Inc. , 1964, vol. 1, page 185**

(73) Proprietor: **NALCO CHEMICAL COMPANY
One Nalco Center
Naperville Illinois 60563-1198 (US)**

(72) Inventor: **Fong, Dodd Wing
1275 Leverenz Road
Naperville Illinois 60565 (US)**
Inventor: **Vallino, Barney, Jr.
1340 Linden Road
Homewood Illinois 60430 (US)**

(74) Representative: **Baillie, Iain Cameron et al
c/o Ladas & Parry
Altheimer Eck 2
D-80331 München (DE)**

**Description**

This invention relates generally to the preparation of terpolymers and, more particularly, to a method for preparing N-sulfomethyl acrylamide, acrylamide, acrylic acid terpolymers from polyacrylonitrile.

It is known that polyacrylamide can have a portion or all of its amide groups converted to N-sulfomethyl amide groups by reacting polyacrylamide with sodium formaldehyde bisulfite to sulfomethylate the amide group. This chemistry has been generally described in the article entitled "Ionic Derivative of Polyacrylamide" taken from the publication Industrial and Engineering Chemistry, December, 1956, by A. M. Schiller and T. J. Suen.

USSR Inventor's Certificate 724 523 discloses high molecular weight compositions which are the product of the polymerisation of acrylonitrile. The polyacrylonitrile is disclosed as being hydrolyzed when formaldehyde and sodium bisulfate are added and the solution is subjected to temperatures ranging from 90-96°C.

U. S. Patent No. 3,979,348 discloses an improved method for producing cationic and anionic acrylamide polymers through the reaction of formaldehyde-secondary amine or formaldehyde-sulfurous acid adduct with finely divided acrylamide in water-in-oil emulsions. The resulting products are disclosed as being easily inverted into aqueous solutions.

Recent developments have shown that the sulfomethylation reaction does not occur unless the temperature of the reaction between the polyacrylamide and sodium formaldehyde bisulfite is at least 100°C.

One of the drawbacks of preparing the N-sulfomethylated acrylamide polymer is that is requires the use of polyacrylamide as a starting material. If it were possible to prepare N-sulfomethylated polymers without necessitating the use of polyacrylamide as a starting polymer but rather an inexpensive polymer, e.g. polyacrylonitrile, an advance in the art would be afforded.

The present invention provides for a method for preparing N-sulfomethyl acrylamide, acrylamide, acrylic acid terpolymers from polyacrylonitrile characterized by reacting the reactants polyacrylonitrile, water and sodium formaldehyde bisulfite at a temperature ranging from 125°-250°C for a period of time sufficient to convert the reactants to an N-sulfomethyl acrylamide, acrylamide, acrylic acid terpolymer and then recovering this terpolymer.

In the practice of the invention the N-sulfomethyl acrylamide copolymers may be prepared from polyacrylonitrile via a one- or two-step reaction:

A. One-step reaction: A mixture of polyacrylonitrile and sodium formaldehyde bisulfite in water with or without a catalyst (e.g., $NH_4OH$ or a catalytic metal such as copper) is heated up to 200°C until a desired degree of conversion is obtained;

B. Two-step reaction: Polyacrylonitrile is first hydrolyzed with or without a catalyst at a temperature up to 200°C. the hydrolyzed polyacrylonitrile is sulfomethylated with $NaHSO_3$-HCHO at 150°C.

The starting polyacrylonitrile should have a molecular weight within the range of at least 1,000-500,000, with a preferred molecular weight range being 3,000-200,000. Polymers within this molecular weight range readily undergo the reactions described herein and produce a finished polymer having a variety of industrial uses such as scale control agents for cooling towers and boilers and dispersants for a variety of aqueous suspensions.

It is also beneficial that the surface area of the polyacrylonitrile be sufficiently large so as to increase the reaction rate. Therefore fine particles e.g. in the particle size range of a few microns or less, facilitate the speed and completeness of the reaction.

The amount of water may vary although it is necessary that sufficient water be provided in the reaction mixture to furnish at a minimum at least 0.5 mols per mol of nitrile groups present in the starting polymer. A general range is 0.5-55 mols. Generally the amount of water is not critical since it is beneficial that a large excess of water be present to allow for the polyacrylonitrile-water mixture to be reacted in the form of a slurry.

The temperature at which the amide groups are formed during the reactions or converted to the N-sulfomethylamide groups must be within the range of 125-250°C. A preferred temperature is 150°C. When polyacrylonitrile is reacted with water at either acid or basic pH's, there is formed a copolymer of acrylamide and acrylic acid. Depending on the pH and the reaction temperature, the ratio of acrylic acid to acrylamide groups may be varied. It is preferred to conduct the reaction at a pH greater than 8.

The reaction procedure whereby the polyacrylonitrile is reacted with a metal catalyst capable of converting nitrile groups in the presence of water to amide groups uses catalysts which are well-known and described in detail in cols. 2 and 3 of U.S. Patent 3,997,606.

2

Metallic copper catalysts are preferred with a most preferred catalyst being a special Raney copper catalyst which contains from about 2 to 45% by weight of aluminum. This catalyst in its preferred embodiment contains particles having an average particle diameter ranging from 0.01 to 1.27 cm (0.002 to 0.5 inches) and has a relative activity of at least about 2. Catalysts of this type as well as their method of preparation are disclosed in U.S. Patent 3,920,740.

The molecular weight of the finished polymer will generally correspond with a molecular weight of the starting polyacrylonitrile.

The sodium formaldehyde bisulfite is formed when formaldehyde and sodium bisulfite are added to water. This reaction is almost instantaneous. In practicing the processes of the invention, the sodium formaldehyde bisulfite can be added either as a pre-prepared solution or the formaldehyde and the bisulfite can be added separately.

The amount of the sodium formaldehyde bisulfite should be sufficient to react with at least 5% if the nitrile groups present in the starting polymers in amounts ranging between 5-15% or more are preferred.

To illustrate the invention, a variety of polyacrylonitrile polymers were subjected to the reaction conditions described above. The results are set forth in Table I.

Table I

Preparation of N-Sulfomethylacrylamide Polymers

| Test # | % Pan | Catalyst | %Cat. | Hydrolysis Conditions | pH Adjusted to 7 for the Sulfomethylation Reaction | Mole % HCHO-NaHSO Based on Polymer | Composition of the Resulting Polymer, Mole % | | | M.W. of the Terpolymer | One-or Two-Step Reaction |
|---|---|---|---|---|---|---|---|---|---|---|---|
| | | | | | | | (CONH$_2$) | (CO$_2$ –) | (SO$_3$ –) | | |
| 1 | 9.6 | NH$_4$OH | 4.5 | 180°C, 5 hrs. / 200°C, 2 hrs. | No | 30 | 57 | 41 | 2 | — | One |
| 2 | 9.6 | RANY Cu | 4.5 | 125°C, 5 hrs. / 150°C, 6 hrs. / 175°C, 6 hrs. / 200°C, 6 hrs. | No | 30 | 38 | 49 | 13 | 143,000 | Two |
| 3 | 4.8 | NH$_4$OH | 3.2 | 200°C, 3 hrs. | No | 30 | 46 | 51 | 3 | 112,000 | Two |
| 4 | 4.8 | NH$_4$OH | 3.2 | 200°C, 2 hrs. | No | 30 | 42 | 52 | 6 | 110,000 | Two |
| 5 | 4.8 | NH$_4$OH | 3.2 | 200°C, 1 hr. | Yes | 30 | 29 | 57 | 14 | 114,000 | Two |
| 6 | 5.0 | None | 0.0 | 200°C, 2 hrs. / 200°C, 4 hrs. | Yes | 20 | 32 | 60 | 8 | — | Two |
| 7 | 5.0 | None | 0.0 | 200°C, 4 hrs. | No | 30 | 58 | 41 | 1 | — | One |
| 8 | 5.0 | CuSO | 0.5 | 150°C, 6 hrs. / 160°C, 6 hrs. / 170°C, 6 hrs. | No | 30 | 86 | 12 | 2 | — | One |
| 9 | 5.0 | NaOH | 10 M% | 150°C, 4 hrs. | Yes | 30 | 72 | 24 | 5 | — | Two |
| 10 | 5.0 | NaOH | 20 M% | 150°C, 4 hrs. | Yes | 30 | 81 | 10 | 9 | — | Two |

## Claims

1. A method for preparing N-sulfomethyl acrylamide, acrylamide, acrylic acid terpolymers from polyacrylonitrile characterized by reacting the reactants polyacrylonitrile, water and sodium formaldehyde bisulfite at a temperature ranging from 125°-250°C for a period of time sufficient to convert the reactants to an N-sulfomethyl acrylamide, acrylamide, acrylic acid terpolymer and then recovering this terpolymer.

2. The method of claim 1, characterized in that the polyacrylonitrile is first reacted with a metal-containing catalyst capable of converting a portion of the nitrile groups of the polyacrylonitrile to amide groups and then reacting said polymer with sodium formaldehyde bisulfite to convert a portion of the acrylamide groups into N-sulfomethyl acrylonitrile groups thereby producing an N-sulfomethyl acrylamide, acrylamide, acrylic acid terpolymer.

3. The method of claims 1 or 2, characterized in that the molecular weight of the starting polyacrylonitrile is between 1,000-500,000.

4. The method of claim 3, characterized in that the molecular weight is between 3,000-200,000.

**Patentansprüche**

1. Verfahren zum Erzeugen von aus N-Sulfomethylacrylamid, Acrylamid und Acrylsäure bestehenden Terpolymeren aus Polyacrylnitril, dadurch gekennzeichnet, daß die Reaktionspartner Polyacrylnitril, Wasser und Natriumformaldehydbisulfit bei einer Temperatur im Bereich von 125 bis 250°C so lange umgesetzt werden, daß die Reaktionspartner zu einem aus N-Sulfomethylacrylamid, Acrylamid und Acrylsäure bestehenden Terpolymer umgesetzt werden, das dann gewonnen wird.

2. Verfahren nach Anspruch 1, dadurch gekennzeichnet, daß das Polyacrylnitril zunächst mit einem metallhaltigen Katalysator umgesetzt wird, der geeignet ist, einen Teil der Nitrilgruppen des Polyacrylnitrils zu Amidgruppen umzusetzen, und daß das Polymer dann mit Natriumformaldehydbisulfit umgesetzt wird, um einen Teil der Acrylamidgruppen in N-Sulfomethylacrylnitrilgruppen umzuwandeln, so daß ein aus N-Sulfomethylacrylamid, Acrylamid und Acrylsäure bestehendes Terpolymer gebildet wird.

3. Verfahren nach Anspruch 1 oder 2, dadurch gekennzeichnet, daß das Molekulargewicht des Ausgangs-Polyacrylnitrils zwischen 1000 und 500 000 liegt.

4. Verfahren nach Anspruch 3, dadurch gekennzeichnet, daß das Molekulargewicht zwischen 3000 und 200 000 liegt.

**Revendications**

1. Procédé de préparation de terpolymères de N-sulfométhylacrylamide, acrylamide, acide acrylique à partir de polyacrylonitrile caractérisé en ce qu'on fait réagir les réactifs polyacrylonitrile, eau et bisulfite de sodium formaldéhyde à une température comprise entre 125 et 250°C pendant une période de temps suffisante pour convertir les réactifs en un terpolymère de N-sulfométhylacrylamide, acrylamide, acide acrylique et ensuite on récupère ce terpolymère.

2. Procédé de la revendication 1, caractérisé en ce qu'on fait d'abord réagir le polyacrylonitrile avec un catalyseur contenant un métal capable de transformer une partie des groupes nitriles du polyacrylonitrile en groupes amide et ensuite on fait réagir ledit polymère avec du bisulfite de sodium formaldéhyde pour transformer une partie des groupes acrylamides en groupes N-sulfométhylacrylonitrile ce qui permet de produire un terpolymère N-sulfométhylacrylamide, acrylamide, acide acrylique.

3. Procédé de la revendication 1 ou 2, caractérisé en ce que le poids moléculaire du polyacrylonitrile de départ est compris entre 1000 et 500 000.

4. Procédé de la revendication 3, caractérisé en ce que le poids moléculaire est compris entre 3000 et 200 000.